# EUROPEAN PATENT SPECIFICATION

(11) **EP 0 380 177 B1**
(45) Date of publication and mention of the grant of the patent: **25.10.1995**
(21) Application number: 90200156.9
(22) Date of filing: 22.01.1990
(51) Int. Cl.: B29C 45/42

(54) **Apparatus for removing mouldings from a mould**
Vorrichtung zum Entfernen von Formteilen aus einer Form
Dispositif pour enlever des pièces moulées d'un moule

(30) Priority: 26.01.1989 SE 8900276
(43) Date of publication of application: 01.08.1990
(73) Proprietor: Lagan Plast AB, S-341 91 Ljungby (SE)
(72) Inventor: Andersson, Inge, S-341 31 Ljungby (SE)
(74) Representative: Linde, Leif

(56) References cited:
- FR-A- 2 606 702
- GB-A- 1 172 827
- GB-A- 1 367 895
- US-A- 3 767 342

## Description

The present invention relates to an apparatus for removing mouldings from a mould of a machine for manufacturing moulded products, for example an injection moulding machine for the manufacturing of plastic mouldings.

When removing mouldings from a mould of for example an injection moulding machine for the manufacturing of plastic mouldings it is a problem after the opening of the mould to take care of the mouldings ejected from the mould in an appropriate way. Of course, it is possible manually to serve the machine by promptly after the ejection of the mouldings positioning the mouldings in suitable packages or in another regular way, but this is a laboursam and expensive method which normally cannot be used in rational manufacturing. Another possibility is to let the mouldings randomly fall down onto a conveyor belt for transporting the mouldings to a packaging station common for several moulding machines, but also this method requires a relatively heavy manual work. It is possible to use different kinds of devices of the robot type so as to take care of the mouldings ejected from the mould, but thereby it is a problem that the space available between the mould parts of the opened mould is restricted and that robot devices of the kind previously known can therefore not be used. In addition thereto, devices of the robot type are inclined to functional disorder, are expensive and are difficult to adapt to cooperation with mouldings of different kinds.

An improved apparatus for removing mouldings from a mould of a machine for the manufacturing of moulded products is described in US-A-3 767 342 and GB-A-1 172 827. An apparatus of this kind is intended for removing mouldings from a mould which comprises an ejector device for separating the mouldings from a mould part which after the opening of the mould supports the moulding and the apparatus comprises a container body which is connected with a suction conduit and, when the mould is open, is displaceable to and from a position opposite to and adjacent said mould part, the container body having an opening in a wall which in said position of the container body is positioned adjacent said mould part, the shape and size of said opening substantially corresponding to a projection on said wall of at least a portion of the moulding supported by said mould part, the container body being thereby adapted in its said position to suck said moulding at least in respect of said portion thereof into the container body and thereupon to displace the moulding to a desired location.

The prior art apparatus comprises a rather complicated arrangement for controlling the action of the suction conduit and the object of the present invention is to provide an apparatus of the kind described which is simple and reliable in respect of the arrangement for controlling the action of the suction conduit.

In order to comply with this object the apparatus according to the invention is characterized in that the container body is supported by a retainer element to which the suction conduit is connected and that the container body is displaceable in relation to the retainer element between a position in which the container body is connected with the suction conduit and a position in which the connection with the suction conduit is interrupted.

It is realized that it is possible to adapt an apparatus according to the invention so as to be used in the manufacturing of mouldings of different design by providing the container body with a replaceable wall defining said opening of the container body.

The invention is described in the following with reference to the accompanying drawings.

Fig. 1 is a schematic side view of an embodiment of an apparatus according to the invention.

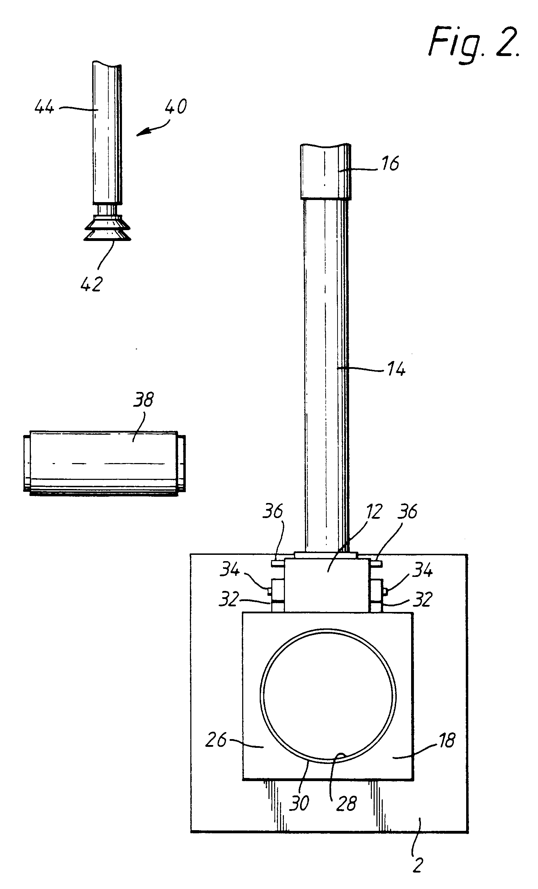

Fig. 2 is a view on line II - II of Fig. 1.

Figs. 3 - 6 are different side views corresponding to Fig. 1 illustrating different steps of the operation of the apparatus according to the invention.

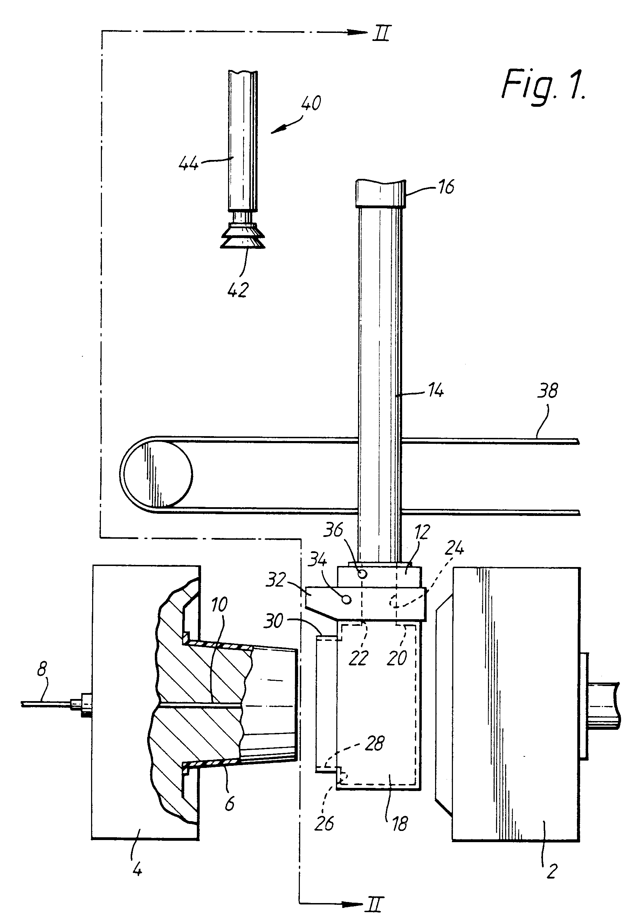

In the embodiment shown in the drawings the apparatus according to the invention is illustrated in connection with an injection moulding machine for the manufacturing of plastic buckets. The injection moulding machine is shown schematically by illustrating the mould of the machine, consisting of two mould parts 2 and 4. In Fig. 1 the mould is shown in an open position with the mould parts 2 and 4 positioned at a distance from each other and with a plastic bucket 6 which has been manufactured in the mould remaining on the mould part 4.

The mould part 4 is provided with a pneumatic ejector device which is schematically shown as a compressed air line 8 and a compressed air channel 10 in the mould part. The compressed air channel 10 extends to the surface of the mould part 4 adapted to form the bottom of the plastic bucket 6, and the pneumatic ejector device is operating by supplying a shock of compressed air through the compressed air line 8 and the compressed air channel 10, the bucket 6 being pushed from the mould part 4.

In accordance with the invention the injection moulding machine is provided with an apparatus for taking care of the plastic bucket 6 ejected from the mould part 4 by the operation of the ejector device. The apparatus according to the invention comprises a retainer element 12 to which there is connected a suction conduit 14 which by means of a flexible hose 16 or the like is in turn connected with a vacuum pump, a fan or the like so as to provide the necessary suction effect in the conduit 14. The retainer element 12 supports a box-shaped container 18 which at its upper wall 20 (Fig. 1) forms an opening 22 through which the interior of the container 18 is connected with the suction conduit 14 through an opening 24 in the retainer element 12.

In the wall 26 of the container 18, which in Fig. 1 is positioned opposite to the mould part 4 there is provided an opening 28 of a shape and size which substantially corresponds to a projection on the wall of the plastic bucket 6 supported by the mould part 4 and more precisely is somewhat larger than this projection so that the main portion of the plastic bucket 6 can be introduced into the container 18 through said opening 28. Outside the wall 26 the opening 28 is enclosed by a circular flange 30 connecting with the shape of the opening 28.

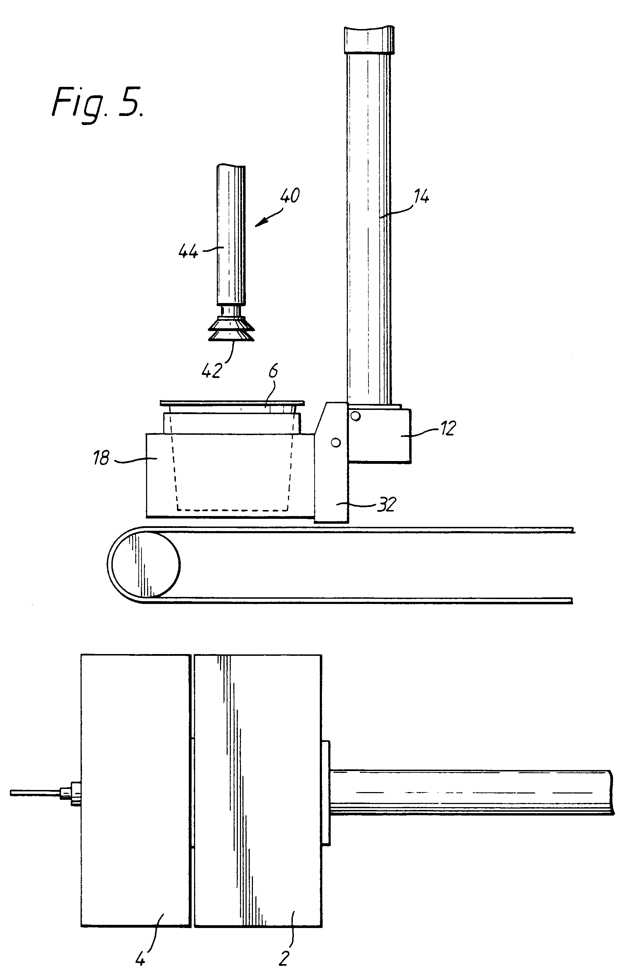

The container 18 is connected with the retainer element 12 by means of a pair of arms 32 fixedly connected with the container 18 and in turn rotatably connected with the retainer element 12 by means of pivot pins 34. Thus, the container 18 is rotatably connected with the retainer element 12, the rotational movement having two end positions, one of the positions being constituted by the position shown in Fig. 1 and the other being constituted by the position shown in Fig. 5, wherein the container 18 is in a position rotated upwardly from the position of Fig. 1, the position of Fig. 5 being restricted by the engagement of the arms 32 with pins 36 on the retainer element 12. The rotation of the container 18 is provided by means of any conventional driving apparatus.

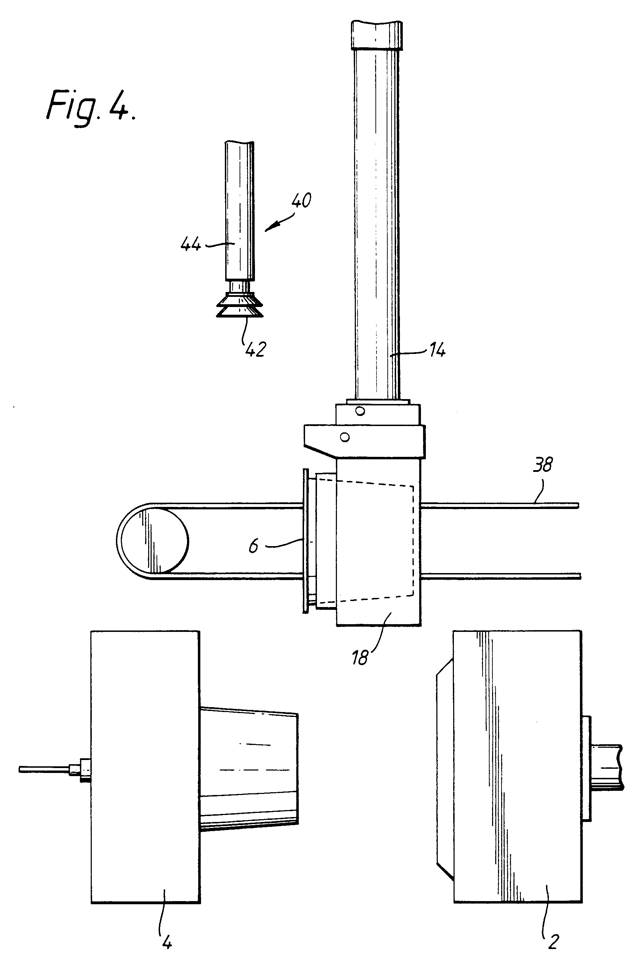

In addition to the rotational movement the container 18 with the retainer element 12 and the suction conduit 14 with the connection of the hose 16 is displaceable upwards from the position of Fig. 1 between the mould parts 2 and 4 to a position above the mould portion 2 and 4 in accordance with Fig. 4.

In addition to the container 18 and the elements directly connected therewith the apparatus according to the invention comprises a conveyor belt 38 and a conveyor device 40 of the suction cup type.

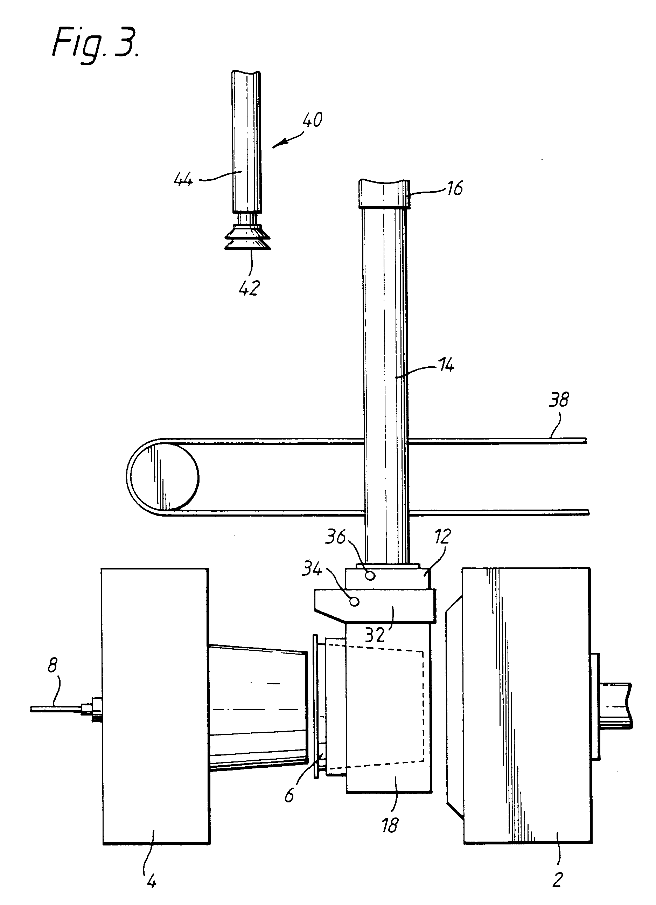

When the plastic bucket 6 is separated from the mould part 4 by actuating the pneumatic ejector device the plastic bucket 6 is sucked into the container 18 to the position shown in Fig. 3 in which the plastic bucket 6 is substantially completely received within the container 18. When some kind of a sensor device, for example photocells or pressure sensing means, indicates that the plastic bucket 6 has been received in the container 18, a device is actuated for moving the container 18 vertically upwards from the position between the mould parts 2 and 4 to the position above the mould parts 2 and 4 as shown in Fig. 4. Thereupon the container 18 is rotated to the position shown in Fig. 5 in which the plastic bucket 6 received in the container 18 is turned upwards. As mentioned, the upwardly turned position of the container 18 is defined by the engagement of the arms 32 with the pins 36. After the container 18 has been displaced from the position between the mould parts 2 and 4, the mould can, as shown in Fig. 5, be closed for manufacturing a new plastic bucket.

In the position of Fig. 5 wherein the container 18 has been rotated away from the suction conduit 14 the connection of the container with the suction conduit 14 has been interrupted so that the plastic bucket 6 in the container 18 is no more subjected to the influence of a sub-pressure. This means that the plastic bucket 6 is in the container 18 subjected only to the influence of gravity and can easily be lifted upwards from the container 18 by means of a conveyor device 40. The conveyor device 40 comprises a suction cup 42 supported by a piston-cylinder-assembly 44. The piston-cylinder-assembly 44 displaces the suction cup 42 to engagement with the bottom of the plastic bucket 6 whereupon the plastic bucket can be lifted from the container 18 and can be displaced to the conveyor belt 38.

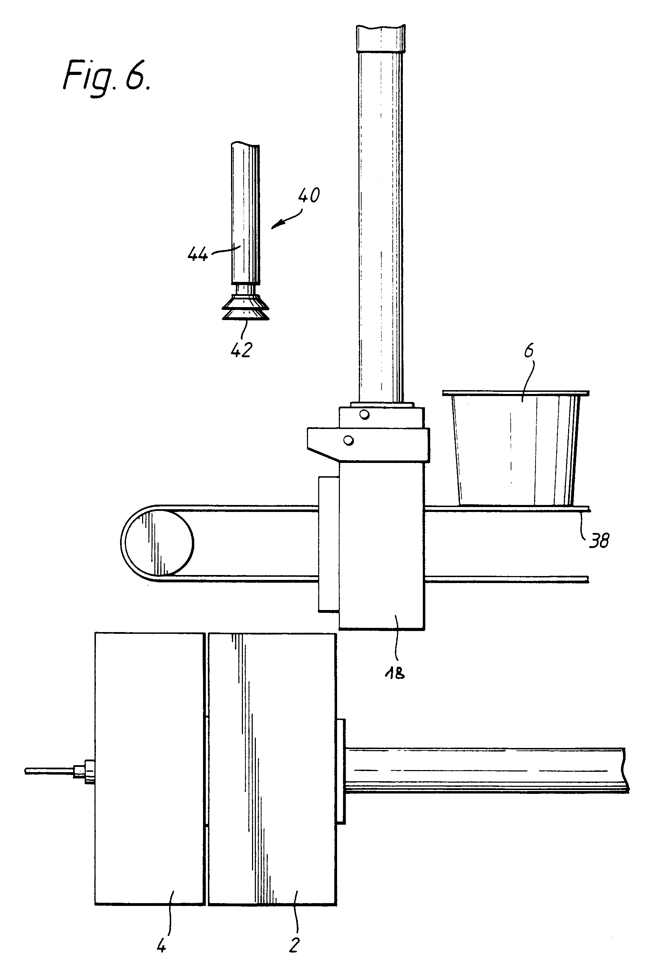

In Fig. 6 there is shown a position in which the plastic bucket 6 has been lifted from the container 18 and the container 18 has returned to a downwardly rotated position so that the container can be moved downwardly to its position between the mould parts 2 and 4 as soon as the mould has been opened again. When this has been conducted the working cycle has been completed and the position of Fig. 1 has been reached.

The working cycle of the apparatus is controlled in a simple and conventional way by means of a computer and is thus completely automized.

Preferably the wall 26 of the container 18, i.e. the wall of the container which is provided with the opening 28 for the mouldings, is replaceable so that the container can be provided with openings adapted to the kind of mouldings manufactured in the injection moulding machine.

Within the scope of the invention it is possible to provide the removal of the plastic bucket from the container 18 in another way than by rotating the container 18 away from the connection with the suction conduit 14 and thereby to remove the bucket by means of the device 40. Thus, it is possible to provide the device with a shift valve and a connection with a pressure line, the shift valve being shiftable between two positions, one position in which the container 18 is connected with the suction conduit 14 and the connection with the pressure line is interrupted, and a position in which the connection with the conduit 14 is interrupted and the pressure line is connected with the container. When the shift valve is shifted to the last mentioned position the bucket is pushed out from the container, the further transportation of the bucket being provided in the desired way.

The apparatus according to the invention is extremely simple and reliable with regard to its function and does not require more space between the parts of the opened mould than what is equal to the size of the mouldings manufactured in the mould.

The invention can be modified within the scope of the following claims.

## Claims

1. Apparatus for removing mouldings (6) from a mould of a machine for the manufacturing of moulded products, for example an injection moulding machine for the manufacturing of plastic mouldings, the mould comprising an ejector device for separating the mouldings from a mould part (4) which after the opening of the mould supports the moulding (6), for example a mould insert, said apparatus comprising a container body (18) which is connected with a suction conduit (14) and, when the mould is open, is displaceable to and from a position opposite to and adjacent said mould part, the container body having an opening (28) in a wall (26) which in said position of the container body is positioned adjacent said mould part, the shape and size of said opening substantially corresponding to a projection on said wall of at least a portion of the moulding (6) supported by said mould part, the container body being thereby adapted in its said position to suck said moulding at least in respect of said portion thereof into the container body (18) and thereupon to displace the moulding to a desired location, **characterized** in that the container body (18) is supported by a retainer element (12) to which the suction conduit (14) is connected and that the container body (18) is displaceable in relation to the retainer element (12) between a position in which the container body is connected with the suction conduit and a position in which the connection with the suction conduit is interruped.

2. Apparatus as claimed in claim 1, **characterized** in that the container body (18) is rotatably supported by the retainer element (12).

3. Apparatus as claimed in claim 1 or 2, **characterized** by a device (40) for removing mouldings (6) from the container body (18) after the container body (18) has been displaced from its position opposite to and adjacent the mould part (4) from which the moulding has been separated and after the container body (18) has been displaced to the position in which the connection with the suction conduit (14) is interrupted.

4. Apparatus as claimed in any of the preceding claims, **characterized** in that the container body (18) is adapted at the suction of the moulding (6) into the container body (18) to receive at least the main portion of the moulding (6).

5. Apparatus as claimed in any of the preceding claims, **characterized** in that the wall (26) of the container body (18), having the opening (28) for receiving the moulding is replaceable for adapting the apparatus to different mouldings.

## Patentansprüche

1. Vorrichtung zum Herausnehmen von Formlingen (6) aus einer Form einer Maschine für die Herstellung von geformten Produkten, z.B. einer Spritzformmaschine für die Herstellung von Kunststofformlingen, wobei die Form eine Auswerfervorrichtung aufweist zum Separieren der Formlinge aus einem Formteil (4), wobei nach dem Öffnen der Form der Formling (6), z.B. ein Formeinsatz, unterstützt wird, wobei die Vorrichtung einen Behälterkörper (18) aufweist, der mit einer Saugleitung (14) verbunden ist und bei offener Form zu und von einer Position gegenüber und benachbart dem Formteil versetzbar ist, der Behälterkörper eine Öffnung (28) in einer Wand (26) hat, die in der Position des Behälterkörpers neben dem Formteil positioniert ist, die Gestalt und Größe der Öffnung im wesentlichen einer Projektion mindestens eines Teiles des Formlinges (6), der von dem Formteil gehaltert ist, auf der Wand entspricht, und wobei der Behälterkörper in dieser seiner Position geeignet ist, den Formling mindestens bezüglich seines Teiles in den Behälterkörper (18) hineinzusaugen und daraufhin den Formling zu einem gewünschten Ort zu versetzen, **dadurch gekennzeichnet,** daß der Behälterkörper (18) durch ein Rückhalteelement (12) abgestützt ist, mit welchem die Saugleitung (14) verbunden ist, und daß der Behälterkörper (18) bezüglich dem Rückhalteelement (12) zwischen einer Position, in weicher der Behälterkörper mit der Saugleitung verbunden ist, und einer Position versetzbar ist, in welcher die Verbindung mit der Saugleitung unterbrochen ist.

2. Vorrichtung nach Anspruch 1, dadurch gekennzeichnet, daß der Behälterkörper (18) von dem Rückhalteelement (12) drehbar getragen ist.

3. Vorrichtung nach Anspruch 1 oder 2, gekennzeichnet durch eine Vorrichtung (40) zum Herausnehmen von Formlingen (6) aus dem Behälterkörper (18), nachdem der Behälterkörper (18) aus seiner Position gegenüber und neben dem Formteil versetzt worden ist, aus welchem der Formling separiert worden ist, und nachdem der Behälterkörper (18) in diejenige Position versetzt worden ist, in welcher die Verbindung mit der Saugleitung (14) unterbrochen ist.

4. Vorrichtung nach einem der vorhergehenden Ansprüche, dadurch gekennzeichnet, daß der Behälterkörper (18) beim Saugen des Formlings (6) in den Behälterkörper (18) hinein geeignet ausgestaltet ist, um mindestens den Hauptteil des Formlings (6) aufzunehmen.

5. Vorrichtung nach einem der vorhergehenden Ansprüche, dadurch gekennzeichnet, daß die Wand (26) des Behälterkörpers (18), welche die Öffnung (28) für die Aufnahme des Formlings aufweist, für die Anpassung der Vorrichtung an unterschiedliche Formlinge austauschbar ist.

## Revendications

1. Appareil pour retirer des moulages (6) du moule d'une machine servant à la fabrication d'objets moulés, par exemple une machine de moulage par injection servant à la fabrication d'objets moulés en matière plastique, ledit moule comportant un dispositif d'éjection pour séparer les moulages d'une pièce de moule (4) qui porte le moulage (6) après l'ouverture du moule, un insert de moule par exemple, ledit appareil comprenant un corps de récipient (18) couplé à un conduit d'aspiration (14) et déplaçable, quand le moule est ouvert, vers et depuis une position dans laquelle il est en face et adjacent à ladite pièce de moule, le corps du récipient ayant une ouverture (28) dans une paroi (26) qui, dans ladite position du corps de récipient, est placée adjacente à ladite pièce de moule, la forme et la taille de ladite ouverture correspondant sensiblement à une saillie se trouvant sur ladite paroi d'une partie au moins du moulage (6) supporté par ladite pièce de moule, le corps du récipient étant ainsi capable dans ladite position d'aspirer ledit moulage, tout au moins en ce qui concerne ladite partie de celui-ci, pour l'amener dans le corps de récipient (18) et de déplacer ensuite le moulage vers un emplacement voulu, caractérisé en ce que le corps de récipient (18) est supporté par un organe de retenue (12) auquel le conduit d'aspiration (14) est couplé, et en ce que le corps de récipient (18) est déplaçable, en relation avec ledit organe de retenue (12), entre une position dans laquelle le corps de récipient est couplé au conduit d'aspiration et une position dans laquelle la liaison avec le conduit d'apsiration est interrompue.

2. Appareil selon la revendication 1, caractérisé en ce que le corps de récipient (18) est supporté par l'organe de retenue (12) de manière à pouvoir tourner.

3. Appareil selon la revendication 1 ou 2, caractérisé par un dispositif (40) permettant de retirer les moulages (6) du corps de récipient (18) après que le corps de récipient (18) a été déplacé de sa position dans laquelle il est en face et adjacent à ladite pièce de moule (4) de laquelle le moulage a été séparé et après que le corps de récipient (18) a été amené dans la position pour laquelle la liaison avec le conduit d'aspiration (14) est interrompue.

4. Appareil selon l'une quelconque des précédentes revendications, caractérisé en ce que le corps de récipient (18) peut, lors de l'aspiration du moulage (6) dans le corps de récipient (18), recevoir au moins la majeure partie du moulage (6).

5. Appareil selon l'une quelconque des précédentes revendications, caractérisé en ce que la paroi (26) du corps de récipient (18) qui comporte l'ouverture (28) destinée à recevoir le moulage est interchangeable afin de pouvoir adapter l'appareil à des moulages différents.
